(19) Europäisches Patentamt
European Patent Office
Office européen des brevets

(11) EP 0 532 954 B1

(12) **EUROPEAN PATENT SPECIFICATION**

(45) Date of publication and mention of the grant of the patent:
**02.04.1997 Bulletin 1997/14**

(51) Int Cl.6: **C08G 73/10**, C08J 3/12, C08J 3/14
// (C08J3/12, C08L79:08), (C08J3/14, C08L79:08)

(21) Application number: **92114628.8**

(22) Date of filing: **27.08.1992**

(54) **Process for producing a granular material of polyimide precursor.**

Verfahren zur Herstellung von einem granularen Material aus einer Polyimid-Vorstufe.

Procédé de fabrication d'un matériau granulaire d'un précurseur de polyimide.

(84) Designated Contracting States:
**DE FR GB IT NL**

(30) Priority: **28.08.1991 JP 244646/91**
**30.09.1991 JP 280862/91**
**30.09.1991 JP 280863/91**
**28.10.1991 JP 309868/91**
**22.01.1992 JP 32657/92**
**16.07.1992 JP 213689/92**

(43) Date of publication of application:
**24.03.1993 Bulletin 1993/12**

(73) Proprietor: **UNITIKA LTD.**
**Amagasaki-shi Hyogo (JP)**

(72) Inventors:
- **Tomioka, Isao**
  **Uji-shi, Kyoto (JP)**
- **Nakano, Takeshi**
  **Naka-gun, Ibaraki (JP)**
- **Furukawa, Mikio**
  **Uji-shi, Kyoto (JP)**
- **Echigo, Yoshiaki**
  **Uji-shi, Kyoto (JP)**

(74) Representative:
**Hansen, Bernd, Dr. Dipl.-Chem. et al**
**Hoffmann, Eitle & Partner**
**Patent- und Rechtsanwälte,**
**Postfach 81 04 20**
**81904 München (DE)**

(56) References cited:
**EP-A- 336 995** **EP-A- 573 974**
**US-A- 3 179 631** **US-A- 3 249 588**

- **PATENT ABSTRACTS OF JAPAN, vol. 12, no. 191 (C-501), 3rd June 1988; & JP-A-62 297 330 (TEIJIN) 24-12-1987**
- **DATABASE WPI, AN=78-78808A (44), Derwent Publications Ltd, London, GB; & JP-A- 53 109 553 (NIPPON TELEG. & TELEPH.) 25-09-1978**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 532 954 B1

## Description

This invention relates to a process for producing a granular material of a polyimide precursor and to a process for producing a polyimide molding and polyimide coating.

Poly(amic-acid)s are typical polyimide precursors and have been produced, for example, by a low temperature solution polymerization method in an aprotic polar solvent such as N,N-dimethylformamide, N-methyl-2-pyrrolidone, hexamethylphosphoramide, N-methylcaprolactam, dimethyl sulfoxide, N-acetyl-2-pyrrolidone, N,N-dimethylacetamide or the like. In this instance, each of these aprotic polar solvents strongly associates with a polyimide precursor which is the solute in the resulting solution because of the high dipole moment of the solvent. Such a phenomenon has been indicated for instance in J. *Polymer Sci.* (A-1, vol.4, pp.2607 - 2616, 1966), J. *Polymer Sci.* (A, vol.25, pp.2005-2020, 1987), J. *Polymer Sci.* (A, vol.25, pp.2479 - 2491, 1987) and ANTEC '91 Abstract (pp.1742 - 1745).

As described above, because of the strong solvent-solute mutual interaction, there is presented a problem in that the solvent cannot be easily removed when a polyimide precursor, a polyimide molding, a polyimide coating or the like is prepared from a polyimide precursor solution which has been obtained by a low temperature solution polymerization method. In addition to this, there is another problem in that hydrolysis of a polyimide precursor occurs due to the hygroscopic nature of the aprotic polar solvent, resulting in a reduction of the degree of polymerization of the polyimide precursor *( J. Appl. Polymer Sci.,* vol.8, pp.1039 - 1051, 1964).

With the object of overcoming such problems, processes have been developed as disclosed in *Kogyo Kagaku Zasshi* (vol.71, No.9, pp.1559 - 1564, 1968) and J. *Appl. Polymer Sci.* (vol.11, pp.609 - 627, 1967), in which a polyimide precursor is formed by a polymerization reaction using a solvent, such as tetrahydrofuran, which has a low boiling point and can be easily removed. According to these processes, a polyimide precursor which does not contain an aprotic polar solvent can be obtained, but the intrinsic viscosity of the product is merely 0.5 to 0.6, and a polyimide molding prepared from the polyimide precursor does not show sufficient mechanical properties.

Other type of processes have been disclosed in JP-B-39-22196, JP-B-39-30060, JP-A-60-221425, JP-A-61-234, JP-A-61-250030 and JP-A-2-18420, in which a polyimide granular material is produced by adding a poor solvent, such as acetone, ethyl acetate or the like, and a cyclization agent, such as pyridine, to an aprotic polar solvent of a polyimide precursor. (The terms "JP-A" and "JP-B" as used herein mean an "unexamined published Japanese patent application" and an "examined Japanese patent publication", respectively) However, since most of the repeating units in these polyimide granular materials are imidated, direct molding of these granular materials results in considerably poor thermal fluidity, and the resulting polyimide moldings do not show sufficient mechanical properties. In addition, such granular materials cannot be made into solution form because of their considerably low solubility in organic solvent.

An object of the present invention is to provide a process for the production of a granular material of a polyimide precursor, from which a solvent can be easily removed. The resulting granular material shall have excellent solubility in an organic solvent and excellent moldability so that a polyimide molding having excellent mechanical properties can be produced.

The solution of this object is as laid down in patent claim 1. A preferred feature is described in sub-claim 2. The present invention also provides a process for producing a polyimide molding and coating as defined in the claims 3 and 4. The inventors of the present invention found that a solvent can be easily removed and a granular material of a polyimide precursor having an inherent viscosity of 0.7 or higher and with excellent solubility in organic solvent can be obtained by the claimed process. The resulting granular material of the polyimide precursor possesses excellent moldability, and a polyimide molding prepared from the granular polyimide precursor material has excellent mechanical strength and contains no residual solvent. Further, a polyimide precursor mixture consisting of the granular polyimide precursor material and the solvent as defined herein exhibits excellent storage stability of the polyimide precursor.

The polyimide precursor of the present invention is an organic polymer which becomes the corresponding polyimide by ring closure when the polyimide precursor heated or chemically treated. In the thus obtained polyimide, 60 to 100 mol%, preferably 70 mol% or more, more preferably 80 mol% or more, of the repeating units of the polymer chain thereof has the polyimide structure as represented, for example, by the following formula (2):

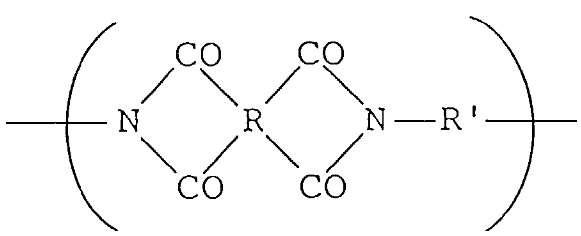

(2)

wherein R and R' are defined below.

Any type of organic polymer may be used, provided that it becomes a polyimide having a property of no thermal melting when it subjected to ring closure. The ring closure may be effected by conventionally used means such as a heat treatment or a process in which a cyclization agent such as pyridine and acetic anhydride, picoline and acetic anhydride, 2,6-lutidine and acetic anhydride, or the like is used as disclosed, for example, in Macromolecular Reviews, vol.11, pp.169-172 (1976).

Examples of preferred polyimide precursors include aromatic polyimide precursors which provide, when imidated, polyimides wherein a benzene ring of aromatic compounds is directly bonded to the imide group. Especially preferred examples of such polyimide precursors include poly(amic-acid)s having a repeating unit represented by the following general formula (1), which are either homopolymers or copolymers of two or more of the repeating units:

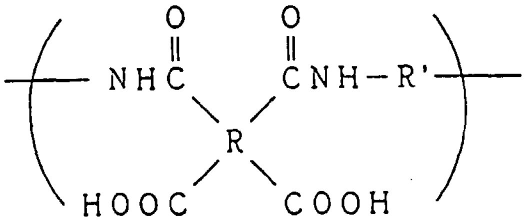

(1)

In the above formula, R is a tetravalent aromatic radical having 1 to 5 benzenoid-unsaturated rings of 6 carbon atoms, the four carbonyl groups being directly bonded to different carbon atoms in a benzene ring of the R radical and each pair of carbonyl groups being bonded to adjacent carbon atoms in the benzene ring of the R radical. The followings are illustrative examples of R:

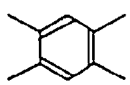

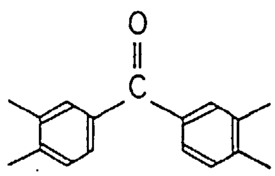

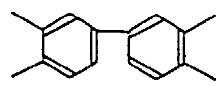

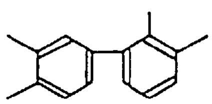

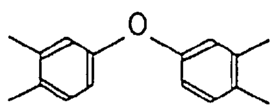

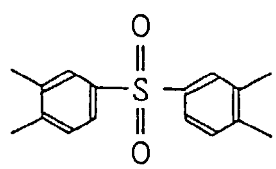

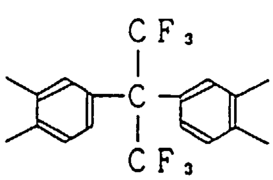

and

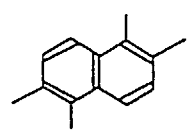

The followings are preferred examples of R:

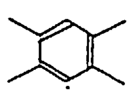

and

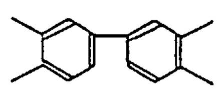

In the above general formula (1), R' is a divalent aromatic radical having 1 to 5 benzenoid-unsaturated rings of 6

carbon atoms, the two amino groups being directly bonded to different carbon atoms in the benzene ring of the R' radical. The followings are illustrative examples of R':

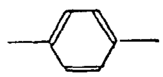
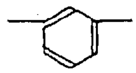
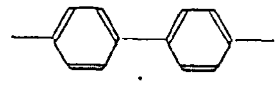

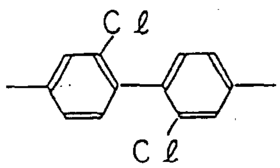
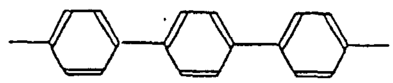

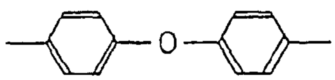
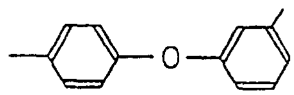

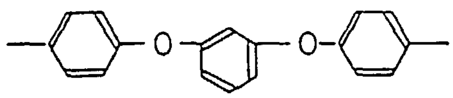
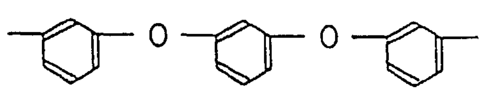

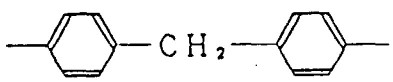
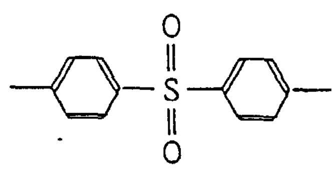

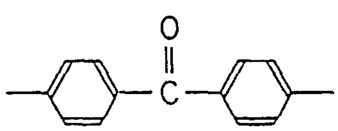
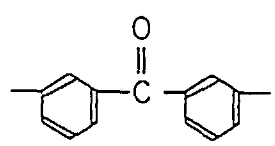

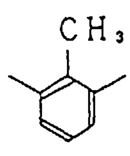
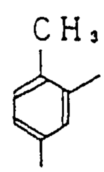

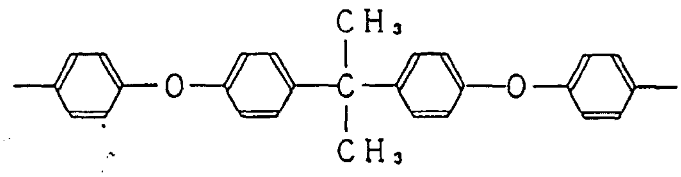

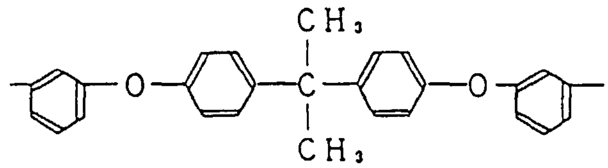

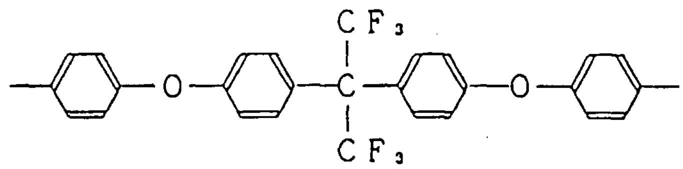

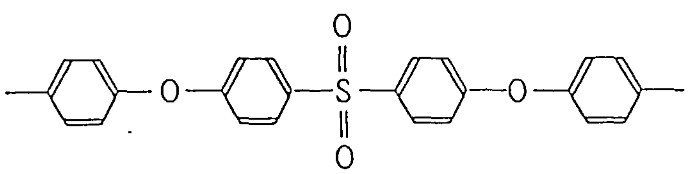

and

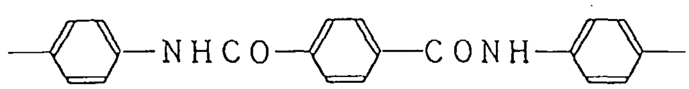

The following is a preferred example of R':

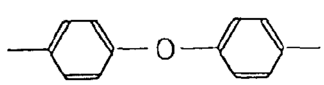

Most preferred examples of the poly(amic-acid) having the repeating unit represented by aforementioned general formula (1) are those obtained from pyromellitic dianhydride (PMDA) and diaminodiphenyl ether (DADE) and 3,3'-4,4'-biphenyltetracarboxylic dianhydride (BPDA) and DADE. When subjected to ring closure, the former becomes poly(4,4'-oxydiphenylenepyromellitimide) and the latter becomes poly(4,4'-oxydiphenylene-3,3'-4,4'-biphenyltetracarboxy imide).

The polyimide precursor in the present invention may be a copolymer which further contains 40 mol% or less, preferably 30 mol% or less, more preferably 20 mol% or less, based on the total weight of the copolymer, of other units such as amide, ether and ester.

The polyimide precursor in the present invention may have an inherent viscosity (η) of at least 0.7, preferably 1.0 or more, more preferably 1.5 or more. Higher (η) value will result in excellent strength, elasticity and the like properties when the polyimide precursor is subjected to ring closure. Though not particularly restricted, the upper limit of the inherent viscosity is preferably about 6. The inherent viscosity (η) is a value directly related to the molecular weight of a polymer and can be calculated using the following formula, after measuring the flow time of a polymer solution and

a solvent therefor (N,N'-dimethylacetamide) at 30°C through a constant volume capillary tube of a standard viscometer.

$$\text{Inherent viscosity} = \frac{\ln\frac{\text{flow time of solution}}{\text{flow time of solvent}}}{c}$$

(wherein ln represents natural logarithm and c represents the gram-number of the polyimide precursor contained in 100 ml of the solution, i.e., 0.5)

The polyimide precursor of the present invention is produced by dissolving or suspending a tetracarboxylic dianhydride in a solvent as defined herein and then adding a diamine spending 5 to 60 minutes to the resulting solution or suspension to effect the polymerization reaction of the dianhydiride with the diamine.

The term "dissolve" means that the solvent can dissolve the polyimide precursor in an amount of 1 g/100 ml or more.

A preferred example of such a solvent may have such a character that it does not dissolve the polyimide precursor, as defined above, but dissolves at least the tetracarboxylic dianhydride or the diamine used. Illustrative examples of such a type of solvent include water soluble ether compounds such as tetrahydrofuran (THF), dioxane, trioxane, 1,2-dimethoxyethane, diethylene glycol dimethyl ether, diethylene glycol diethyl ether, 2-methoxyethanol, 2-ethoxyethanol, 2-(methoxymethoxy) ethoxyethanol, 2-isopropxyethanol, 2-butoxyethanol, diethylene glycol, diethylene glycol monomethyl ether, diethylene glycol monoethyl ether, diethylene glycol monobutyl ether, triethylene glycol, triethylene glycol monoethyl ether, tetraethylene glycol, 1-methoxy-2-propanol, 1-ethoxy-2-propanol, dipropylene glycol, dipropylene glycol monomethyl ether, dipropylene glycol monoethyl ether, tripropylene glycol monomethyl ether and polypropylene glycol, of which THF is particularly preferred. These solvents may be used alone or as a mixture of two or more thereof.

The diamine used in the present invention may be a primary amine wherein amino groups are directly bonded to an aromatic ring.

The concentration of the polyimide precursor is, e.g., of 1 to 8 g/100 ml, and the molar ratio of the tetracarboxylic dianhydride to the diamine is, e.g., 0.95 to 1.05. The polymerization reaction may be effected at a temperature of from -20°C to 50°C, preferably from 0 to 30°C, for 1 to 4 hours. The diamine may be added as it is or as a solution or a suspension after dissolving or suspending it in a solvent as earlier exemplified in the concentration, e.g, of 1 to 6 g/ 100 ml.

It is essential to add the diamine as it is or as a solution or a suspension to a solution or a suspension of a tetracarboxylic dianhydride. Since the polyimide precursor thus formed does not dissolve in the used solvent and therefore is suspended in the solvent, a solid granular polyimide precursor material can be obtained by removing the solvent in accordance with conventionally used means such as filtration using a glass filter, a paper filter, or drying. Since a specific solvent as defined herein is used, removal of the solvent can be done easily, and a granular material or a final product of the polyimide precursor can be obtained with no residual solvent.

The extended storage stability of the polyimide precursor can be achieved when the granular material is stored in a state of containing about 10 % by weight or more of the solvent, by incompletely removing the solvent or by suspending the granular material again in the solvent. In other words, storage stability of the granular polyimide precursor material can be maintained by mixing it with said solvent.

The granular material of a polyimide precursor of the present invention may be in any desired shape such as in a spherical form, in an irregular form, in a fibrous form or the like. At least 80% by weight of the granular material has a particle size of 500 µm or below.

A polyimide molding having excellent properties can be obtained from the granular polyimide precursor material of the present invention in a conventional manner. For example, a molded polyimide product can be obtained by subjecting the polyimide precursor to press molding at a temperature of from 10 to 50°C under a pressure of from 100 to 3,000 $kg/cm^2$ and increasing the temperature in vacuo (lower than 10 mmHg) to a final temperature of 400°C at a rate of 4°C/min. As an alternative, a part of the repeating units (80 to 99 mol%) of the poly(amic-acid) may be converted into imide ring by heating at a temperature of from 100 to 300°C in an atomosphere of air. And the resulting granular may be molded into a desired shape by heating at 300 to 400°C under a pressure of from 100 to 3,000 $kg/cm^2$.

The granular polyimide precursor material of the present invention can be applied to various purposes when the granular material is made into a uniform solution by dissolving it in an appropriate solvent which does not exhibit a strong solvation with the polyimide precursor. The term "strong solvation" means strong association of a solute and a solvent, or a substantial interaction between the solvent and a polyimide precursor as the solute in a polyimide precursor solution. The degree of solvation can be judged, for example, on the basis of the solvation index measured by the following procedure: a 5,000 mg portion of a solution containing 300 mg of a polyimide precursor is uniformly poured in a conventional glass dish having an inner diameter of 86 mm and a height of 18 mm and air-dried at 20°C until the content does not flow when the glass dish is slanted at an angle of 40 degree; thereafter, the solvent is removed by distillation at 40°C for 40 hours under a reduced pressure of 10 mmHg and the weight of the polyimide precursor

remaining in the dish is weighed; and the solvation index is then calculated using the following formula:

$$\frac{A - 300}{300}$$

where A is weight (mg) of the dried polyimide precursor.

A preferred solvation index of the solvent is less than 0.35, more preferably 0.1 to 0.3 (a solution wherein the solvation index between a solvent and a solute is 3.5 or more should be considered as a "strong solution"). As a solvent of this type a solvent having a dipole moment of 3 debyes or less is preferably used. In general, one which is a poor solvent for the polyimide precursor when used as a single solvent but is a good solvent when used as a mixture with other solvents is preferably used.

Preferred examples of good solvents include mixed solvents selected from the group consisting of water soluble ether compounds, water soluble alcohol compounds, water soluble ketone compounds and water, or a water soluble compound having an ether group and an alcoholic hydroxyl group in the same molecule.

Preferred combinations of mixed solvents for use in the preparation of a uniform solution are a water soluble ether compound with water, a water soluble ether compound with a water soluble alcohol compound or a water soluble ketone compound with water. A preferred mixing ratio (weight ratios) in the mixed solvent is in the range of from 99.9: 0.1 to 65:35, more preferably from 96:4 to 79:21, in the case of a water soluble ether compound with water; in the case of a water soluble ether compound with a water soluble alcohol compound, it is in the range of from 99.9:0.1 to 25:75, more preferably from 90:10 to 56:44; and, in the case of a water soluble ketone compound with water, it is in the range of from 99.9:0.1 to 40:60, more preferably from 90:10 to 65:35.

Illustrative examples of the water soluble ether compounds include THF, dioxane, trioxane, 1,2-dimethoxyethane, diethylene glycol dimethyl ether, diethylene glycol diethyl ether and the like, of which THF is particularly preferred.

Illustrative examples of the water soluble alcohol compounds include methanol, ethanol, 1-propanol, 2-propanol, tert-butyl alcohol, ethylene glycol, 1,2-propanediol, 1,3-propanediol, 1,3-butanediol, 1,4-butanediol, 2,3-butanediol, 1,5-pentanediol, 2-butene-1,4-diol, 2-methyl-2,4-pentanediol, glycerol, 2-ethyl-2-hydroxymethyl-1,3-propanediol, 1,2,6-hexanetriol and the like, of which methanol, ethanol and ethylene glycol are particularly preferred.

Illustrative examples of the water soluble ketone compounds include acetone, methyl ethyl ketone and the like, of which acetone is particularly preferred.

Illustrative examples of the water soluble solvent having an ether group and an alcoholic hydroxyl group in the same molecule include 2-methoxyethanol, 2-ethoxyethanol, 2-(methoxymethoxy) ethoxyethanol, 2-isopropxyethanol, 2-butoxyethanol, tetrahydrofurfuryl alcohol, diethylene glycol, diethylene glycol monomethyl ether, diethylene glycol monoethyl ether, diethylene glycol monobutyl ether, triethylene glycol, triethylene glycol monoethyl ether, tetraethylene glycol, 1-methoxy-2-propanol, 1-ethoxy-2-propanol, dipropylene glycol, dipropylene glycol monomethyl ether, dipropylene glycol monoethyl ether, tripropylene glycol monomethyl ether, polyethylene glycol, polypropylene glycol and the like, of which 2-methoxyethanol and tetrahydrofurfuryl alcohol are particularly preferred.

A preferred concentration of a polyimide precursor in the polyimide precursor solution of the present invention is in the range of from 0.1 to 60% by weight, more preferably from 1 to 25% by weight, most preferably from 5 to 20% by weight, based on the total weight of the solution.

When the polyimide precursor is made into a uniform solution, it can be used as a varnish or an adhesive material , and a film or a coating can be formed from such a solution in a conventional manner. For example, a polyimide film may be obtained by dissolving the granular polyimide precursor material in an appropriate solvent as defined, casting the thus prepared polyimide precursor solution on an appropriate base material (such as a glass plate) at 60 to 100°C in an atomosphere of air to a desired thickness (e.g., 1 to 100 μm) using a film applicator, removing the solvent from the cast solution and then heating the resulting film at 150 to 300°C for a period of 0.5 to 5 hours in an atomosphere of inert gass such as nitrogen and argon under a pressure of 1 to 800 mmHg to effect the imidation reaction. In the same manner, a base material can be coated with a polyimide by applying the polyimide precursor solution to the base material of interest and drying and heating the applied solution.

In addition, when required, conventional additive agents may be added to the granular polyimide precursor material of the present invention, or to a uniform solution prepared by dissolving the granular material in an appropriate solvent, in such amounts that they do not harm the effects of the present invention. Examples of such additive agents include pigments, fillers such as conductive carbon black and metal particles, abrasion agents, dielectric substances or lubricants. Other polymers and water insoluble solvents such as ethers, alcohols, ketones, esters, halogenated hydrocarbons or hydrocarbons may also be used as additives in such amounts that they do not harm the effects of the present invention.

When the granular polyimide precursor material of the present invention is dissolved in an appropriate solvent, the resulting polyimide precursor solution can be used in the production, for example, of a heat resistant insulating tape, a heat resistant adhesive tape, a high density magnetic recording base, a condenser or a film for FPC (flexible

printed circuit) use. It is also useful for the production of: molding materials and moldings such as a sliding means in which fluoride resin or graphite is packed, a structural element reinforced with glass fiber or carbon fiber, a bobbin for miniature coil use or, a sleeve, laminated materials such as an insulating spacer for power transistor use, a magnetic head spacer, a power relay spacer or a transformer spacer; and enamel coating materials for use in insulation coating of electric wires and cables, a solar battery, a low temperature storage tank, a space heat insulator, an integrated circuit or a slot liner. It is also useful for the production of an ultrafiltration membrane, or a gas separation membrane.

The following inventive and comparative examples are provided to further illustrate the present invention. Unless otherwise indicated, all percentages are by weight based on the total composition at issue and reactions were carried out in an atomosphere of an inert gass.

EXAMPLE 1

A 21.9 g portion of pyromellitic dianhydride was dissolved in 500 ml of THF (substantially anhydrous) at 0°C. To this solution there was gradually added 500 ml of THF (substantially anhydrous) in which 20.0 g of diaminodiphenyl ether had been dissolved spending 30 minutes. The resulting solution was incubated at 0°C for 2 hours to obtain a suspension of poly(amic-acid). Thereafter, the poly(amic-acid) was separated from the suspension using a glass filter to obtain granular poly(amic-acid). The inherent viscosity ($\eta$) of the poly(amic-acid) was found to be 1.50.

EXAMPLE 2

A suspension (mixture) containing poly(amic-acid) was obtained by repeating the procedure of Example 1, except that 20.0 g of diaminodiphenyl ether was added as powder to 1,000 ml of THF (substantially anhydrous) in which 21.9 g of pyromellitic dianhydride has been dissolved. The inherent viscosity ($\eta$) of the poly(amic-acid) was found to be 1.49.

COMPARATIVE EXAMPLE 1

A suspension containing poly(amic-acid) was obtained by repeating the procedure of Example 1, except that the mixing of the THF solutions was conducted in the contrary order, i.e., the THF solution of pyromellitic dianhydride was added to the THF solution of diaminodiphenyl ether. The poly(amic-acid) was separated from the suspension to obtain granular poly(amic-acid). The inherent viscosity ($\eta$) of the poly(amic-acid) was found to be 0.52.

COMPARATIVE EXAMPLE 2

A poly(amic-acid) solution was obtained by allowing 37.5 g of pyromellitic dianhydride to react with 30.0 g of diaminodiphenyl ether in 600 ml of dimethylacetamide, which was not a solvent that did not exhibit a strong mutual interaction with a polyimide precursor, at 20°C for 1 hour. The inherent viscosity ($\eta$) of the poly(amic-acid) was found to be 1.72.

To each of the granular poly(amic-acid) material suspension obtained in Example 1 and the poly(amic-acid) solution obtained in Comparative Example 2 there was added water to a concentration of 50 ppm, 0.4% or 4%. The thus prepared samples were maintained at 25°C to measure changes in the viscosity thereof during a storage and to compare their moisture resistance. The results are shown in Table 1.

TABLE 1

| | Moisture content | Inherent viscosity ($\eta$) | | |
|---|---|---|---|---|
| | | 1 day | 5 days | 10 days |
| Example 1 | 50 ppm | 1.50 | 1.52 | 1.51 |
| Comp. Ex. 2 | 50 ppm | 1.70 | 1.60 | 1.48 |
| Example 1 | 0.4% | 1.48 | 1.49 | 1.51 |
| Comp. Ex. 2 | 0.4% | 1.69 | 1.50 | 1.33 |
| Example 1 | 4 % | 1.50 | 1.51 | 1.49 |
| Comp. Ex. 2 | 4 % | 1.65 | 1.23 | 1.00 |

As is evident from the above table, when a polyimide precursor is mixed with a solvent which does not exhibit a strong mutual interaction with the polyimide precursor, a hydrolysis-caused decrease in viscosity does not occur in the resulting polyimide precursor mixture even in the presence of water in a mixed system thereof due to moisture absorption.

EXAMPLE 3

A 2.96 g portion of biphenyltetracarboxylic dianhydride was suspended in 50 ml of THF (substantially anhydrous), and the resulting suspension was maintained at 0°C. To this suspension there was gradually added 50 ml of THF (substantially anhydrous) in which 2.00 g of diaminodiphenyl ether had been dissolved. The resulting mixture was incubated at 0°C for 2 hours to obtain a suspension of poly(amic-acid). Thereafter, the poly(amic-acid) was separated from the suspension to obtain granular poly(amic-acid). The inherent viscosity (η) of the poly(amic-acid) was found to be 2.19.

COMPARATIVE EXAMPLE 3

A 1.00 g portion of diaminodiphenyl ether was dissolved in 50 ml of THF (substantially anhydrous), and the resulting solution was maintained at 0°C. To this solution there was gradually added 1.48 g of biphenyltetracarboxylic dianhydride as powder. The resulting mixture was incubated at 0°C for 2 hours to obtain a suspension of poly(amic-acid). Thereafter, the poly(amic-acid) was separated from the suspension to obtain granular poly(amic-acid). The inherent viscosity (h) of the poly(amic-acid) was found to be 0.45.

EXAMPLE 4

A 2.19 g portion of pyromellitic dianhydride was suspended in 50 ml of diethylene glycol dimethyl ether, and the resulting mixture was maintained at 0°C. To this mixture there was gradually added 50 ml of diethylene glycol dimethyl ether in which 2.00 g of diaminodiphenyl ether had been dissolved. The resulting mixture was incubated at 0°C for 2 hours to obtain a suspension of poly(amic-acid). Thereafter, the poly(amic-acid) was separated from the suspension to obtain granular poly(amic-acid). The inherent viscosity (η) of the poly(amic-acid) was found to be 0.83.

EXAMPLE 5

A 1.64 g portion of pyromellitic dianhydride was dissolved in 50 ml of 1,2-dimethoxyethane, and the resulting solution was maintained at 0°C. To this solution there was gradually added 50 ml of 1,2-dimethoxyethane in which 1.50 g of diaminodiphenyl ether had been dissolved. The resulting solution was incubated at 0°C for 2 hours to obtain a suspension of poly(amic-acid). Thereafter, the poly(amic-acid) was separated from the suspension to obtain granular poly(amic-acid). The inherent viscosity (η) of the poly(amic-acid) was found to be 0.75.

EXAMPLE 6

A 1.09 g portion of pyromellitic dianhydride was suspended in 25 ml of dioxane, and the resulting solution was maintained at 0°C. To this solution there was gradually added 25 ml of dioxane in which 1.00 g of diaminodiphenyl ether had been dissolved. The resulting solution was incubated at 0°C for 2 hours to obtain a suspension of poly(amic-acid). Thereafter, the poly(amic-acid) was separated from the suspension to obtain granular poly(amic-acid). The inherent viscosity (η) of the poly(amic-acid) was found to be 0.82.

EXAMPLE 7

Each of the poly(amic-acid) granular materials obtained in Example 1 and Comparative Example 1 was molded at 20°C under a pressure of 3,000 kg/cm$^2$. The temperature of the molded product was gradually increased from 20°C to 400°C in a vacuum oven undre a pressure of 10 mmHg spending 100 hours, kept at 400°C for 10 hours and then gradually cooled down to 20°C spending 25 hours. The physical properties of the thus obtained polyimide moldings are shown in Table 2.

TABLE 2

| | Bending strength (kg/mm$^2$) | Flexual modulus (kg/mm$^2$) |
|---|---|---|
| Example 1 | 10.5 | 365 |
| Comp. Ex. 1 | 7.3 | 321 |

EXAMPLE 8

The poly(amic-acid) granular material obtained in Example 1 was dissolved in THF and water to prepare a poly(amic-acid) solution consisting of 16.7% by weight of the poly(amic-acid) granular material, 80.0% by weight of THF and 3.3% by weight of of water. The thus prepared poly(amic-acid) solution was deposited evenly on a glass plate at a thickness of 250 μm by moving a film applicator at a rate of 25 mm/second. After 30 minutes of drying at 20°C, the resulting film was peeled off from the glass plate and soaked in an acetic anhydride/pyridine solvent system (70/30 in volume ratio) for 12 hours to effect ring closure. Thereafter, the thus treated film was washed with an excess amount of toluene at 20°C in an atomosphere of air to extract the cyclization agent and then dried at 80°C for 120 minutes under atomospheric pressure. The film obtained in this way was transparent with a bright yellow color and highly uniform. It had a thickness of 20 mm and a tensile strength of 14.6 kg/mm$^2$ and showed no evidence of carbon monoxide generation even when heated at a high temperature.

EXAMPLE 9

The poly(amic-acid) granular material obtained in Example 1 was dissolved in THF and methanol to prepare a poly(amic-acid) solution consisting of 8.0% by weight of the poly(amic-acid), 73.6% by weight of THF and 18.4% by weight of methanol. The thus prepared poly(amic-acid) solution was subjected to spinning at a spinning rate of 10 m/min by delivering the solution through a nozzle (0.08 mmØ x 20 holes) at a delivery rate of 1.5 ml/min into a coagulation bath containing water at 20°C. The resulting thread was drawn to about 1.5 times its original length in water at 20°C, wound up on a roll and air-dried at 20°C for 60 minutes. After further drying at 80°C for 120 minutes in an atomosphere of air, the resulting thread was heated at 300°C for 60 minutes in an atmosphere of nitrogen under a pressure of 1 mmHg to effect thermal ring closure. The thread obtained in this way was yellowish brown and had a modulus of elasticity of 73 g/d.

EXAMPLE 10

The poly(amic-acid) granular material obtained in Example 1 was dissolved in THF and methanol to prepare a poly(amic-acid) solution consisting of 6.0% by weight of the poly(amic-acid), 75.8% by weight of THF and 18.2% by weight of methanol. The thus prepared poly(amic-acid) solution was deposited evenly on a surface-treated copper foil having a thickness of 25 μm in a thickness of 1,500 μm at a rate of 40 mm/second using a film applicator. After 30 minutes of drying by air drying at 20°C, the resulting foil was heated at 200°C for 15 hours in a vacuum oven to effect thermal ring closure. The coating obtained in this way was transparent with a deep yellow color and rigidly adhered to the surface of the copper foil. When the copper foil was removed by etching, the remaining coat had a thickness of 35 μm and a tensile strength of 15.9 kg/mm$^2$.

EXAMPLE 11

The poly(amic-acid) granular material obtained in Example 1 was dissolved in acetone and water to prepare a poly(amic-acid) solution consisting of 15.3% by weight of the poly(amic-acid) granular material, 73.9% by weight of acetone and 10.8% by weight of water. The thus prepared poly(amic-acid) solution was treated in the same manner as described in Example 10 to obtain a coating having a thickness of 30 μm and a tensile strength of 15.4 kg/mm$^2$.

Thus, it is apparent that there have been provided, in accordance with the present invention, a process for the production of the granular material. The polyimide precursor granular material obtained by the process of the present invention has excellent moldability, and the polyimide moldings formed therefrom possess excellent mechanical properties and are almost free from residual solvent. Since the granular material is highly soluble in organic solvents, it can be used as a solution which finds versatile use in various applications. Also, the mixture comprising the polyimide precursor granular material of the present invention can maintain the polyimide precursor granular material with high storage stability. In addition, according to the production process of the present invention, a polyimide precursor granular material can be produced easily and solvents can be removed easily.

## Claims

1. A process for producing a polyimide precursor granular material which has an inherent viscosity of 0.7 or more, measured at a concentration of 0.5 g in 100 ml and at 30°C by use of N,N'-dimethylacetamide as a solvent and a constant volume capillary tube, and wherein at least 80% by weight of the material has a particle size of 500μm or less, which comprises dissolving or suspending a tetracarboxylic dianhydride in a solvent that does not dissolve the polyimide precursor in an amount of lg/100 ml or more and adding a diamine to the resulting solution or suspension to effect polymerization reaction at a temperature of from -20 to 50°C.

2. A process according to claim 1 wherein the molar ratio of said tetracarboxylic dianhydride to said diamine is 0.95 to 1.05.

3. A process for producing a polyimide molding which comprises

producing a polyimide precursor granular material which has an inherent viscosity of 0,7 or more , measured at a concentration of 0,5 g in 100 ml and at 30°C by use of N,N'-dimethylacetamide as a solvent and a constant volume capillary tube , and wherein at least 80% by weight of the material has a particle size of 500 µm or less by the process according to claim 1,
dissolving the thus obtained polyimide precursor granular material in a solvent exhibiting a solvatation index between the solvent and the polyimide precursor, as defined in the description, of less than 0.35 and subjecting the resulting solution to a molding step wherein a ring closure reaction is effected during the molding step.

4. A process for producing a polyimide coating which comprises

producing a polyimide precursor granular material which has an inherent viscosity of 0,7 or more , measured at a concentration of 0,5 g in 100 ml and at 30°C by use of N,N'-dimethylacetamide as a solvent and a constant volume capillary tube , and wherein at least 80% by weight of the material has a particle size of 500 µm or less by the process according to claim 1,
dissolving the thus obtained polyimide precursor granular material in a solvent exhibiting a solvatation index between the solvent and the polyimide precursor, as defined in the description, of less than 0.35 and applying the resulting solution on a base material wherein a ring closure reaction is effected during the applying.

## Patentansprüche

1. Verfahren zur Herstellung eines granularen Polyimid-Vorstufen-Materials, das eine Eigenviskosität von 0,7 oder mehr besitzt, gemessen bei einer Konzentration von 0,5 g in 100 ml und bei 30°C unter Verwendung von N,N-Dimethylacetamid als Lösungsmittel und einer Kapillarröhre mit konstantem Volumen, und wobei wenigstens 80 Gew.% des Materials eine Teilchengrösse von 500 µm oder weniger besitzt, welches umfasst: Auflösen oder Suspendieren eines Tetracarbonsäuredianhydrids in einem Lösungsmittel, das die Polyimid-Vorstufe nicht in einer Menge von 1 g/100 ml oder mehr auflöst, und Hinzufügen eines Diamins zur resultierenden Lösung oder Suspension, um die Polymerisationsreaktion bei einer Temperatur von -20 bis 50°C zu bewirken.

2. Verfahren gemäss Anspruch 1, wobei das Molverhältnis des besagten Tetracarbonsäuredianhydrids zum besagten Diamin 0,95 bis 1,05 beträgt.

3. Verfahren zur Herstellung eines Polyimid-Formteils, das umfasst: Herstellen eines granularen Polyimid-Vorstufen-Materials, das eine Eigenviskosität von 0,7 oder mehr besitzt, gemessen bei einer Konzentration von 0,5 g in 100 ml und bei 30°C unter Verwendung von N,N-Dimethylacetamid als Lösungsmittel und einer Kapillarröhre mit konstantem Volumen, und wobei wenigstens 80 Gew.% des Materials eine Teilchengrösse von 500 µm oder weniger besitzt, nach dem Verfahren gemäss Anspruch 1, Auflösen des so erhaltenen granularen Polyimid-Vorstufen-Materials in einem Lösungsmittel, das einen wie in der Beschreibung definierten Solvatations-Index zwischen dem Lösungsmittel und der Polyimid-Vorstufe von weniger als 0,35 aufweist, und Unterwerfen der resultierenden Lösung einem Formpressschritt, wobei während des Formpressschrittes eine Ringschlussreaktion bewirkt wird.

4. Verfahren zur Herstellung eines Polyimid-Überzugs, das umfasst: Herstellen eines granularen Polyimid-Vorstufen-Materials, das eine Eigenviskosität von 0,7 oder mehr besitzt, gemessen bei einer Konzentration von 0,5 g in 100 ml und bei 30°C unter Verwendung von N,N-Dimethylacetamid als Lösungsmittel und einer Kapillarröhre mit konstantem Volumen, und wobei wenigstens 80 Gew.% des Materials eine Teilchengrösse von 500 µm oder weniger besitzt, nach dem Verfahren gemäss Anspruch 1, Auflösen des so erhaltenen granularen Polyimid-Vorstufen-Materials in einem Lösungsmittel, das einen wie in der Beschreibung definierten Solvatations-Index zwischen dem Lösungsmittel und der Polyimid-Vorstufe von weniger als 0,35 aufweist, und Auftragen der resultierenden Lösung auf ein Trägermaterial, wobei während des Auftragens eine Ringschlussreaktion bewirkt wird.

## Revendications

1. Procédé de production d'un produit granulaire constitué d'un précurseur de polyimide ayant une viscosité inhérente d'au moins 0,7, mesurée à une concentration de 0,5 g dans 100 ml et à 30°C avec du N,N-diméthylacétamide comme solvant et un tube capillaire à volume constant, et dans lequel au moins 80 % en masse du produit a une taille de particules inférieure ou égale à 500 µm, qui comprend la dissolution ou la mise en suspension d'un dianhydride tétracarboxylique dans un solvant qui ne dissout pas le précurseur de polyimide en une quantité supérieure ou égale à 1 g/100 ml, et l'addition d'une diamine à la solution ou à la suspension obtenue pour effectuer une réaction de polymérisation à une température de -20 à 50°C.

2. Procédé selon la revendication 1, dans lequel le rapport molaire dudit dianhydride tétracarboxylique à ladite diamine est compris entre 0,95 et 1,05.

3. Procédé de production d'un moulage en polyimide, dans lequel on prépare par le procédé selon la revendication 1 un produit granulaire constitué d'un précurseur de polyimide ayant une viscosité inhérente d'au moins 0,7, mesurée à une concentration de 0,5 g dans 100 ml et à 30°C avec du N,N-diméthylacétamide comme solvant et un tube capillaire à volume constant, et dans lequel au moins 80 % en masse du produit a une taille de particules inférieure ou égale à 500 µm, on dissout le produit granulaire constitué du précurseur de polyimide ainsi obtenu dans un solvant présentant un indice de solvatation entre le solvant et le précurseur de polyimide, tel que défini dans la description, inférieur à 0,35, et on soumet la solution obtenue à une étape de moulage, en effectuant une réaction de cyclisation au cours de l'étape de moulage.

4. Procédé de production d'un revêtement en polyimide, dans lequel on prépare par le procédé selon la revendication 1 un produit granulaire constitué d'un précurseur de polyimide ayant une viscosité inhérente d'au moins 0,7, mesurée à une concentration de 0,5 g dans 100 ml et à 30°C avec du N,N-diméthylacétamide comme solvant et un tube capillaire à volume constant, et dans lequel au moins 80 % en masse du produit a une taille de particules inférieure ou égale à 500 µm, on dissout le produit granulaire constitué du précurseur de polyimide ainsi obtenu dans un solvant présentant un indice de solvatation entre le solvant et le précurseur de polyimide, tel que défini dans la description, inférieur à 0,35, et on applique la solution obtenue sur un matériau support, en effectuant une réaction de cyclisation au cours de l'application.